# FASCICULE DE BREVET EUROPEEN

(11) **EP 3 087 040 B1**
(45) Date de publication et mention de la délivrance du brevet: **29.08.2018**
(21) Numéro de dépôt: 14835480.6
(22) Date de dépôt: 19.12.2014
(51) Int. Cl.: C03B 5/235, C03B 5/237, F23C 9/06, F23D 14/32, F23L 7/00, F23L 15/04, F25J 3/04

(54) **PROCÉDÉ ET INSTALLATION DE COMBUSTION AVEC RÉCUPÉRATION D'ÉNERGIE OPTIMISÉE**
VERBRENNUNGSVERFAHREN UND ANLAGE MIT OPTIMIERTER ENERGIERÜCKGEWINNUNG
COMBUSTION METHOD AND INSTALLATION WITH OPTIMIZED ENERGY RECUPERATION

(30) Priorité: 23.12.2013 FR 1363477
(43) Date de publication de la demande: 02.11.2016
(73) Titulaire: L'Air Liquide Société Anonyme pour l'Etude et l'Exploitation des Procédés Georges Claude, 75007 Paris (FR)
(72) Inventeur: JARRY, Luc, F-61270 Beaufai (FR); JOUMANI, Youssef, F-78121 Crespieres (FR); LEROUX, Bertrand, F-91650 Breuillet (FR); TSIAVA, Rémi, F-91250 Saint Germain-les-Corbeil (FR)
(74) Mandataire: De Vleeschauwer, Natalie Y.L.D.
(86) Numéro de dépôt international: PCT/FR2014/053472
(87) Numéro de publication internationale: WO 2015/097385

(56) Documents cités:
- EP-A1- 2 546 204
- EP-A2- 1 338 848

## Description

La présente invention concerne un procédé pour la combustion d'un combustible utilisant comme comburant un gaz préchauffé riche en oxygène.

Dans l'industrie, l'air reste le comburant, c'est-à-dire l'oxydant de combustion, le plus souvent utilisé.

Il est toutefois connu d'utiliser comme comburant de l'oxygène au lieu de l'air, notamment pour améliorer l'efficacité de la combustion et ainsi le rendement énergétique d'une installation industrielle comportant une chambre de combustion, pour maximiser l'exploitation de l'énergie thermique générée dans la chambre de combustion et pour réduire les émissions polluantes de la chambre de combustion, telles que des NOx,

Si l'intérêt énergétique et environnemental de la combustion avec de l'oxygène est bien connu et reconnu, le coût de l'oxygène par rapport à celui de l'air continue à limiter l'utilisation de l'oxygène en tant que comburant dans un contexte industriel.

Afin d'améliorer encore plus l'efficacité de l'oxycombustion et de réduire ainsi le besoin en combustible et en oxygène pour un procédé industriel donné, des procédés de préchauffage d'oxygène ont été développés.

Il est notamment connu de préchauffer de l'oxygène dans un échangeur de chaleur.

On connait en particulier une méthode pour le préchauffage indirect de l'oxygène avec de la chaleur résiduelle présente dans les gaz de combustion (fumées) à la sortie de la chambre de combustion. Selon cette méthode, un fluide auxiliaire est préchauffé dans un échangeur auxiliaire par échange direct avec les fumées chaudes. L'oxygène est ensuite préchauffé dans au moins un échangeur de chaleur principal par échange direct avec le fluide auxiliaire chaud issu de l'échangeur auxiliaire. Le cas échéant, on préchauffe également le combustible par échange direct avec le fluide auxiliaire chaud dans un échangeur de chaleur supplémentaire. Différentes formes de réalisation de cette méthode sont notamment décrites dans EP-A-0872690 and WO2006/054015.

EP-A-2546204 décrit un procédé de fusion de verre utilisant une autre forme de réalisation de la méthode de préchauffage indirect. Pendant une première phase du procédé objet de EP-A-2546204, un premier débit DO1 d'un comburant riche en oxygène est fourni pour la combustion d'un combustible dans une chambre de combustion, cet oxydant riche en oxygène ayant été préchauffé par échange thermique avec un oxydant moins riche en oxygène, ledit oxydant moins riche étant chauffé par échange thermique avec les fumées générées dans la chambre de combustion. Pendant une deuxième phase, on utilise comme comburant un débit réduit DO2 de l'oxydant riche en oxygène ainsi qu'un débit DA2 de l'oxydant moins riche chauffé.

EP-A-2546204 décrit un procédé selon le préambule de la revendication 1, une installation selon le préambule de la revendication 11, et un procédé selon le préambule de la revendication 14.

EP-A-1338848 décrit un procédé pour la récupération de chaleur des fumées d'un four utilisant un comburant enrichi en oxygène. Les fumées évacuées sont utilisées pour le préchauffage direct ou indirect du combustible et/ou du comburant dans un système d'échange de chaleur direct ou indirect. Les fumées sont ensuite introduites dans une chaudière de récupération de chaleur pour la production d'énergie mécanique. Le ou les systèmes d'échange de chaleur direct ou indirect peuvent être munis d'une dérivation de fumées afin de réguler la portion desdites fumées effectivement introduite dans le système d'échange de chaleur.

Par rapport à d'autres méthodes connues pour le préchauffage d'oxygène, la méthode de préchauffage indirect présente l'avantage important d'une plus grande sécurité. En effet, en cas d'une perforation par corrosion ou par érosion à l'intérieur de l'échangeur auxiliaire, les fumées chaudes, susceptibles de contenir de la matière combustible résiduelle, n'entrent en contact qu'avec le fluide auxiliaire. De manière analogue, en cas d'une perforation à l'intérieur d'un échangeur principal ou supplémentaire, l'oxygène, respectivement le combustible, n'entre en contact qu'avec le fluide auxiliaire.

Le bilan énergétique de cette méthode est particulièrement positif.

Un inconvénient de cette méthode est toutefois l'encombrement créé par les différents échangeurs et en particulier par l'échangeur auxiliaire, sachant que, pour éviter des pertes de chaleur, lesdits échangeurs sont positionnés le plus proche possible de la sortie des fumées de la chambre de combustion.

Un autre inconvénient est le prix des différents échangeurs de chaleur qui, étant donné les températures et la nature des fluides circulant dedans, doivent être particulièrement robustes.

Les échangeurs sont conçus et dimensionnés pour un fonctionnement optimal aux conditions (températures et débits des fluides circulant dans les échangeurs) qui correspondent aux conditions nominales de l'installation industrielle comportant la chambre de combustion, c'est-à-dire aux conditions de fonctionnement normales de l'installation industrielle.

Toutefois, les installations industrielles peuvent être amenées à fonctionner en dehors de leurs conditions nominales, et plus particulièrement avec un besoin de chaleur plus élevé que lors de son opération normale, par exemple à cause du vieillissement et de l'usure de l'installation, ou lors d'une campagne à tirée augmentée d'un four de fusion.

Dans ce cas, le fonctionnement de la méthode de préchauffage n'est pas optimal du fait que l'échangeur auxiliaire présente une capacité de récupération de chaleur résiduelle des fumées évacuées trop basse par rapport au besoin de chaleur : la chaleur résiduelle effectivement récupérée est alors insuffisante pour l'usage ou les différents usages que l'on souhaite en faire, tels que le préchauffage d'oxygène, le préchauffage du combustible et/ou d'autres usages. Ceci conduit à une consommation plus importante d'énergie, et notamment de combustible.

On pourrait envisager d'utiliser un échangeur auxiliaire ayant une capacité de récupération de chaleur supérieure à celle correspondant au fonctionnement nominal de l'installation ou encore d'installer un échangeur auxiliaire complémentaire à utiliser uniquement quand le besoin de chaleur récupérée est plus élevé qu'en opération nominale de l'installation. Toutefois, ceci entrainerait un encombrement et un prix encore plus importants de l'installation.

La présente invention a pour but de remédier au moins partiellement aux problèmes décrits ci-dessus.

Elle a notamment pour but de permettre une augmentation de l'efficacité des échanges de chaleur sans augmentation du coût de mise en oeuvre du procédé, voire en réduisant ce coût.

Suivant l'invention, ceci est réalisé par un apport direct de chaleur par l'introduction de fumées chaudes dans un fluide caloporteur utilisé pour le préchauffage.

La présente invention concerne plus particulièrement un premier procédé amélioré pour la combustion d'un combustible avec un comburant préchauffé riche en oxygène dans une chambre de combustion. Cette combustion génère de la chaleur et des fumées chaudes dans ladite chambre de combustion. Les fumées chaudes, qui contiennent de la chaleur résiduelle, sont évacuées de la chambre de combustion. On récupère ensuite de la chaleur résiduelle des fumées évacuées en chauffant un gaz, dit gaz auxiliaire, par échange thermique avec au moins une partie des fumées chaudes évacuées dans un premier échangeur de chaleur, dit échangeur de chaleur auxiliaire. On obtient ainsi un gaz auxiliaire chaud et des fumées tempérées.

Au moins une première partie du gaz auxiliaire chaud ainsi obtenu est introduite dans un deuxième échangeur, dit échangeur principal, dans lequel le comburant est préchauffé par échange thermique avec un gaz caloporteur comportant ladite au moins une première partie du gaz auxiliaire chaud. On obtient ainsi un comburant préchauffé et un gaz caloporteur tempéré.

Le comburant préchauffé est fourni à la chambre de combustion pour la combustion du combustible.

Suivant l'invention, il est possible d'augmenter la teneur en énergie thermique du gaz caloporteur en mélangeant une portion des fumées chaudes évacuées, qui n'est pas introduite dans l'échangeur auxiliaire, avec la au moins une première partie du gaz auxiliaire chaud avant que ladite au moins une partie du gaz auxiliaire chaud soit introduite dans l'échangeur principal pour le préchauffage du comburant.

Grâce à cette teneur plus élevée en énergie thermique du gaz caloporteur, la présente invention permet de répondre à un besoin plus élevé en énergie thermique dans la chambre de combustion, par exemple un besoin plus en énergie thermique plus élevé que le besoin nominal de l'installation.

L'invention permet également de compenser une réduction d'efficacité d'un ou plusieurs des échangeurs de chaleur due, par exemple, à un vieillissement de l'installation.

Dans le présent contexte, on comprend par :
- un gaz « riche en oxygène » ou « riche » : un gaz ayant une teneur en oxygène supérieure ou égal à 70%vol, de préférence supérieure ou égale à 90%vol, voire supérieur ou égal à 95%vol (c'est-à-dire de 95%vol à 100%vol) ;
- un gaz « majoritairement inerte » : un gaz consistant pour plus de 50%vol en une ou des substances qui ne participent pas à la combustion (ni en tant que combustible ni en tant que comburant) aux conditions existantes dans la chambre de combustion. Un gaz majoritairement inerte contient donc nécessairement moins que 50% vol d'oxygène ;
- « échangeur de chaleur » : une installation ou un dispositif de chauffage dans lequel le premier fluide (gaz), qui apporte de la chaleur, et le fluide (gaz), à chauffer circulent dans des enceintes distinctes, le premier fluide transmettant de la chaleur au fluide à chauffer à travers une ou des parois séparant les deux enceintes, c'est à dire sans contact direct et sans mélange entre les deux fluides ;
- « brûleur » : un dispositif ou un ensemble de dispositifs pour la mise en contact d'au moins un combustible avec au moins un comburant afin de permettre la combustion dudit au moins un combustible au moyen dudit au moins un comburant. Un brûleur comporte typiquement des injecteurs et/ou lances pour l'injection de combustible et de comburant dans une zone de combustion. Un brûleur peut également comporter d'autres éléments, tels qu'un allumeur, un détecteur de flamme, etc ;
- « chaleur résiduelle » : la chaleur qui est évacuée de la chambre de combustion avec les fumées générées par la combustion ;
- « préchauffage » : le chauffage d'un produit, tel qu'un combustible, un comburant ou encore une charge à chauffer ou fondre, avant son introduction dans la chambre de combustion.

Dans le présent contexte, deux éléments ou dispositifs sont « fluidiquement reliés » quand ces deux éléments sont reliés par au moins une canalisation ou au moins un conduit de manière à permettre le transport d'un fluide à travers ladite au moins une canalisation ou à travers ledit au moins un conduit d'un des deux éléments vers l'autre des deux éléments.

Suivant l'invention, le gaz auxiliaire est de préférence de l'air ou un gaz auxiliaire majoritairement inerte ou encore un mélange d'air avec un gaz majoritairement inerte.

Le gaz auxiliaire peut notamment être choisi parmi de l'air, de la vapeur et du CO₂, ou encore un mélange d'au moins deux desdits gaz, le gaz auxiliaire étant de préférence de l'air.

Comme indiqué ci-dessus, la récupération de chaleur résiduelle par le biais d'un tel gaz auxiliaire présente l'avantage d'une grande sécurité.

Dans la mesure où, suivant la présente invention, la teneur en fumées chaudes dans le gaz caloporteur reste assez faible, cette sécurité est maintenue.

Ainsi, on maintiendra avantageusement la teneur en fumées chaudes évacuées du gaz caloporteur est inférieure ou égale à 30%vol, et de préférence inférieure ou égale à 20%vol. Afin d'augmenter la teneur en énergie thermique du fluide caloporteur de manière significative, la teneur en fumées chaudes évacuées du gaz caloporteur est de préférence au moins 10%vol. Le rapport volumétrique entre, d'une part, fumées chaudes évacuées et, d'autre part, gaz auxiliaire chaud dans le gaz caloporteur est de préférence inférieur ou égal à 43%vol, de préférence inférieur ou égal à 25%vol, et de préférence au moins 11%vοl.

Comme indiqué ci-dessus, l'échangeur auxiliaire et l'échangeur principal sont typiquement conçus et dimensionnés pour un fonctionnement optimal aux conditions nominales de l'installation industrielle comportant la chambre de combustion.

Dans ce cas, la teneur en énergie thermique de la première partie du gaz auxiliaire chaud est suffisante pour le préchauffage du comburant aux conditions de fonctionnement normales de l'installation industrielle et il n'est pas nécessaire d'augmenter la teneur en énergie thermique du gaz caloporteur dans ces conditions normales, mais uniquement quand le procédé nécessite une récupération plus élevée de la chaleur résiduelle des fumées évacuées.

La présente invention concerne ainsi également un deuxième procédé flexible pour la combustion, dans une chambre de combustion, d'un combustible avec un comburant préchauffé riche en oxygène avec génération de chaleur et de fumées chaudes à l'intérieur de ladite chambre de combustion. Comme déjà décrit ci-dessus en rapport avec un premier procédé suivant l'invention, les fumées chaudes, qui contiennent de la chaleur résiduelle, sont évacuées de la chambre de combustion. On récupère de la chaleur résiduelle desdites fumées chaudes évacuées en chauffant un gaz auxiliaire par échange thermique, dans un échangeur de chaleur auxiliaire, avec au moins une partie des fumées chaudes évacuées. On obtient ainsi du gaz auxiliaire chaud et des fumées tempérées.

Au moins une partie du gaz auxiliaire chaud est alors introduite dans un échangeur principal dans lequel le comburant riche en oxygène est préchauffé par échange thermique avec un gaz caloporteur, ledit gaz caloporteur comportant ladite au moins une partie du gaz auxiliaire chaud. On obtient ainsi du comburant préchauffé et du gaz caloporteur tempéré.

Le comburant préchauffé riche en oxygène est ensuite fourni à la chambre de combustion pour la combustion du combustible.

Le deuxième procédé suivant l'invention est flexible en ce qu'il présente plusieurs modes d'opération :
- un premier mode d'opération dans lequel le gaz caloporteur ne comporte pas de fumées évacuées, ce premier mode d'opération étant par exemple utilisé lors du fonctionnement nominal de l'installation industrielle, et
- un second mode d'opération dans lequel on augmente la teneur en énergie thermique du gaz caloporteur en y ajoutant une partie des fumées chaudes évacuées qui n'a pas été introduite dans l'échangeur auxiliaire et dont la chaleur résiduelle n'a donc pas été récupérée pour chauffer le gaz auxiliaire.

Ledit second mode d'opération correspond par conséquent au premier procédé suivant l'invention dont différentes formes de réalisation ont été décrites ci-dessus.

Dans le premier mode d'opération du deuxième procédé, le gaz caloporteur consiste en du gaz auxiliaire chaud.

Les procédés suivant l'invention comportent avantageusement également une étape dans laquelle on préchauffe également le combustible dans un échangeur de chaleur dit échangeur de combustible par échange thermique avec un deuxième gaz caloporteur.

Quand le second gaz caloporteur correspond au premier gaz caloporteur, le préchauffage du comburant et du combustible se font en série. Quand le second gaz caloporteur, utilisé pour le préchauffage du combustible comporte une second partie du gaz auxiliaire chaud distinct de la au moins une première partie du gaz auxiliaire chaud du premier gaz caloporteur, le préchauffage du comburant et le préchauffage du combustible se font en série.

La présente invention permet ainsi de récupérer une partie de la chaleur résiduelle des fumées chaudes évacuées plus importante que celle qu'il est possible de récupérer uniquement avec l'échangeur auxiliaire.

En d'autres termes, la présente invention permet une récupération optimale de la chaleur résiduelle des fumées évacuées au moyen de l'échangeur auxiliaire lors du fonctionnement nominal de l'installation (premier mode d'opération), mais elle permet également de répondre à un besoin plus important en énergie thermique de l'installation par la récupération d'une partie plus importante de la chaleur industrielle (second mode d'opération) : une première partie de la chaleur résiduelle étant récupérée par échange thermique entre des fumées chaudes évacuées et le gaz auxiliaire dans l'échangeur auxiliaire ; une deuxième partie de la chaleur résiduelle étant récupérée par mélange direct de fumées chaudes évacuées avec le gaz auxiliaire chaud.

Les procédés de combustion suivant l'invention sont avantageux pour un grand nombre d'applications. La chambre de combustion peut ainsi être une chambre de fusion, une chambre d'affinage ou une chambre de fusion/affinage, par exemple pour la fusion de verre (y compris de l'émail) ou pour la fusion de métaux. La chambre de fusion peut également être une chambre de combustion d'une chaudière. L'invention est particulièrement utile dans le cas où la chambre de combustion est une chambre de fusion de verre, une chambre d'affinage de verre ou une chambre de fusion/affinage de verre, telle que par exemple la chambre de fusion/affinage d'un four de verre de type « float » pour la fabrication de verre plat.

La présente invention concerne également une installation adaptée pour la mise en oeuvre d'un procédé de combustion suivant l'invention.

Une telle installation comporte une chambre de combustion, un premier échangeur de chaleur, dit échangeur auxiliaire, et un deuxième échangeur de chaleur, dit échangeur principal.

La chambre de combustion est munie d'injecteurs pour l'injection d'un combustible et pour l'injection d'un comburant dans la chambre de combustion et d'une sortie de fumées. L'échangeur auxiliaire comporte, d'une part, une entrée de fumées chaudes et une sortie de fumées tempérées et, d'autre part, une entrée de gaz auxiliaire à chauffer et une sortie de gaz auxiliaire chaud. La sortie de fumées chaudes de la chambre de combustion est fluidiquement reliée à l'entrée de fumées chaudes de l'échangeur auxiliaire.

L'échangeur principal comporte, d'une part, une entrée de gaz caloporteur chaud et une sortie de gaz caloporteur tempéré et, d'autre part, une entrée de comburant à préchauffer et une sortie de comburant préchauffé. La sortie de gaz auxiliaire chaud de l'échangeur auxiliaire est fluidiquement reliée à l'entrée de gaz caloporteur chaud de l'échangeur principal. La sortie de comburant préchauffé est fluidiquement reliée à au moins un des injecteurs de la chambre de combustion.

Selon l'invention, l'installation comprend également une canalisation reliant fluidiquement ou capable de fluidiquement relier la sortie de fumées chaudes avec l'entrée de gaz caloporteur de l'échangeur principal en parallèle de l'échangeur auxiliaire. Cette canalisation permet de cette manière à permettre l'écoulement d'une partie contrôlée des fumées chaudes issues de la sortie de fumées vers l'entrée de gaz caloporteur chaud de l'échangeur principal.

L'installation suivant l'invention peut également comporter un échangeur de combustible pour le préchauffage de combustible au moyen d'un deuxième gaz combustible en amont de la chambre de combustion. Comme décrit ci-dessus par rapport aux procédés suivant l'invention, cet échangeur de combustible peut fonctionner en série ou en parallèle de l'échangeur principal qui préchauffe le comburant.

L'échangeur de combustible et l'échangeur principal peuvent être entourés d'enceintes ou enveloppes distinctes ou encore peuvent être enveloppés d'une même enceinte.

Les injecteurs pour l'injection de combustible et de comburant sont généralement intégrés dans des brûleurs et/ou des lances d'injection.

Comme indiqué ci-dessus, la chambre de combustion peut ainsi être une chambre de fusion, une chambre d'affinage ou une chambre de fusion/affinage, par exemple pour la fusion de verre (y compris de l'émail) ou pour la fusion de métaux. La chambre de fusion peut également être une chambre de combustion d'une chaudière.

L'invention est particulièrement utile dans le cas où la chambre de combustion est une chambre de fusion de verre, une chambre d'affinage de verre ou une chambre de fusion/affinage de verre, telle que par exemple la chambre de fusion/affinage d'un four de verre de type « float ».

Comme déjà indiqué, il est possible que la nécessité ou l'intérêt de faire fonctionner une installation industrielle en dehors de ses conditions nominales, et plus particulièrement avec un besoin de chaleur plus élevé que lors de son opération normale, ne se manifeste qu'un certain temps après le démarrage de l'installation, par exemple à cause du vieillissement et de l'usure de l'installation et de la chambre de combustion et/ou un plusieurs des échangeurs de chaleur.

L'intérêt de la présente invention peut alors devenir manifeste un certain temps après la construction de l'installation. On peut alors profiter d'un arrêt temporaire de l'installation, par exemple entre deux campagnes, pour procéder à l'adaptation de l'installation pour la mise en oeuvre d'un procédé suivant l'invention.

La présente invention concerne ainsi également, un procédé de modification d'une installation comportant une chambre de combustion, un premier échangeur de chaleur, dit échangeur auxiliaire, et un deuxième échangeur de chaleur, dit échangeur principal, dans laquelle :
- la chambre de combustion est munie d'injecteurs pour l'injection d'un combustible et pour l'injection d'un comburant dans la chambre de combustion et d'une sortie de fumées,
- l'échangeur auxiliaire comporte, d'une part, une entrée de fumées chaudes et une sortie de fumées tempérées et, d'autre part, une entrée de gaz auxiliaire à chauffer et une sortie de gaz auxiliaire chaud, la sortie de fumées chaudes de la chambre de combustion étant fluidiquement reliée à l'entrée de fumées chaudes de l'échangeur auxiliaire, et
- l'échangeur principal comporte, d'une part, une entrée de gaz caloporteur chaud et une sortie de gaz caloporteur tempéré et, d'autre part, une entrée de comburant à préchauffer et une sortie de comburant préchauffé, la sortie de gaz auxiliaire chaud de l'échangeur auxiliaire étant fluidiquement reliée à l'entrée de gaz caloporteur chaud de l'échangeur principal, la sortie de comburant préchauffé étant fluidiquement reliée à au moins un des injecteurs de la chambre de combustion.

Selon le procédé de modification suivant l'invention, on ajoute à ladite installation une canalisation capable de fluidiquement relier la sortie de fumées chaudes avec l'entrée de gaz caloporteur de l'échangeur principal en parallèle de l'échangeur auxiliaire, de manière à permettre l'écoulement d'une partie contrôlée des fumées chaudes issues de la sortie de fumées vers l'entrée de gaz caloporteur chaud de l'échangeur principal.

Comme déjà indiqué, la chambre de combustion est une chambre de fusion, une chambre d'affinage, une chambre de fusion/affinage ou une chambre de combustion d'une chaudière, de préférence une chambre de fusion de verre, une chambre d'affinage de verre, une chambre de fusion/affinage de verre.

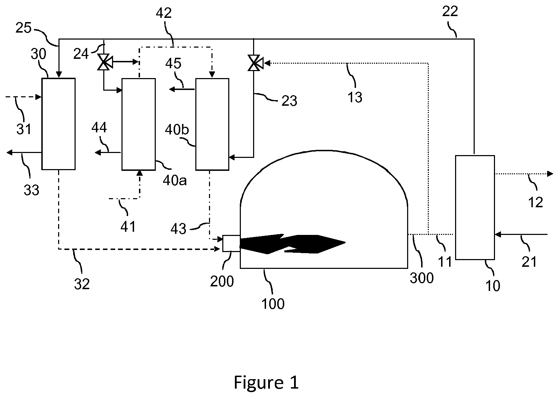

La présente invention est illustrée par l'exemple ci-après, référence étant faite à la figure 1 qui est une représentation schématique d'une installation adaptée pour la mise en oeuvre d'un procédé de combustion suivant l'invention.

Ledit procédé permet de limiter les coûts des équipements utilisés pour le préchauffage de comburant par l'utilisation d'un premier échangeur pour le chauffage d'un oxydant riche en oxygène, suivi d'un deuxième échangeur pour le préchauffage du comburant, ledit comburant étant obtenu en mélangeant l'oxydant chauffé dans le premier échangeur avec un gaz majoritairement inerte en amont du deuxième échangeur.

L'installation comporte une chambre de fusion, par exemple une chambre de fusion de verre 100, équipée de brûleurs 200 pour la combustion d'un combustible, tel que le gaz naturel avec un comburant riche en oxygène. Bien qu'un seul brûleur soit montré dans la figure 1, une telle chambre de fusion comporte généralement plusieurs brûleurs. Cette combustion génère de la chaleur et des fumées à l'intérieur de la chambre 100. La chaleur générée par cette combustion est utilisée pour la fusion de matière vitrifiable dans la chambre 100. Les fumées sont évacuées de la chambre par une sortie de fumées 300. Les fumées évacuées sont chaudes (typiquement de l'ordre de 1200°C à 1600°C) et contiennent une quantité non-négligeable de chaleur résiduelle.

La présente invention permet une récupération et exploitation optimisée de la chaleur résiduelle. Au moins une partie des fumées chaudes évacuées sont introduites dans un échangeur auxiliaire 10 dans lequel circule de l'air utilisé comme gaz auxiliaire 21 (appelé ci-après « air auxiliaire »).

Quant uniquement une partie des fumées chaudes est introduite dans l'échangeur auxiliaire 10, cette partie correspond avantageusement à au moins 70%vol, de préférence au moins 75%vol et encore de préférence au moins 80%vol des fumées évacuées.

Dans l'échangeur auxiliaire 10, l'air auxiliaire est chauffé par échange thermique avec les fumées chaudes. On obtient ainsi de l'air auxiliaire chaud 22, typiquement à une température de 600°C à 900°C et des fumées tempérées 12. L'air auxiliaire chaud est introduit dans un échangeur principal 40b dans lequel circule le comburant riche en oxygène 42, typiquement un gaz consistant pour au moins 90%vol en oxygène, de préférence pour au moins 95%vol.

A l'intérieur de l'échangeur principal 40a, 40b, le comburant est préchauffé par échange thermique avec un gaz colporteur chaud 23 qui comprend au moins une partie de l'air auxiliaire chaud 22.

On obtient ainsi du comburant chaud 43 et du gaz caloporteur tempéré 45.

Le comburant chaud est fourni à au moins un des brûleurs 200 de la chambre de combustion 100, et de préférence à l'ensemble des brûleurs 200 de la chambre 100.

Dans la figure 1, un seul échangeur 40b est montré. Toutefois, l'installation peut comporter plusieurs échangeurs principaux 40a et 40b, et en particulier plusieurs exemplaires de l'échangeur 40b qui est relié au(x) brûleur(s) 200. Dans ce cas, chaque échangeur principal 40b alimente de préférence un nombre limité des brûleurs 200 en comburant chaud. Par exemple, un échangeur principal 40b peut être associé à chacun des brûleurs 200 de la chambre 100 utilisant du comburant riche en oxygène.

Suivant la présente invention, il est possible d'augmenter la chaleur fournie à l'échangeur principal 40a et 40b en remplaçant de l'air auxiliaire chaud comme fluide caloporteur 23 par un mélange d'air auxiliaire chaud avec des fumées évacuées chaudes. A cette fin, une partie 13 des fumées évacuées chaudes n'est pas introduite dans l'échangeur auxiliaire 10 pour le chauffage du gaz auxiliaire.

Cette partie 13 des fumées chaudes est au contraire mélangée avec l'air auxiliaire chaud 22 (ou uniquement avec la partie de l'air auxiliaire chaud qui est introduite dans l'échangeur principal 40a et 40b pour le préchauffage du comburant 42).

De cette manière, il est possible de préchauffer le comburant à une température plus élevée et/ou de préchauffer un débit plus important du comburant. Il est possible de préchauffer le comburant en une seule étape en introduisant du comburant froid, par exemple à température ambiante, dans l'échangeur 40b et en chauffant ledit comburant jusqu'à sa température finale dans l'échangeur principal 40b avant de la fournir au(x) brûleur(s) 200.

Dans l'exemple illustré dans la figure 1, toutefois, le préchauffage du comburant est réalisé en deux étapes. Un gaz riche en oxygène 41 est d'abord introduit dans un échangeur supplémentaire 40a de l'échangeur principal dans lequel ledit gaz riche 41 est chauffé par échange thermique avec une partie 24 de l'air auxiliaire chaud jusqu'à une première température.

On obtient ainsi un gaz riche partiellement chauffé et un flux d'air auxiliaire tempéré 44.

Le gaz riche partiellement chauffé 42 est alors introduit comme comburant 42 dans l'échangeur principal 40b.

Il est également possible d'encore augmenter l'énergie thermique du comburant riche 42 avant son introduction dans l'échangeur principal 40b, en mélangeant une quantité limité de l'air auxiliaire chaud avec le gaz riche partiellement chauffé, ledit mélange étant alors introduit comme comburant riche en 42 dans l'échangeur principal 40b.

L'inconvénient de cette option est une légère réduction de la teneur en oxygène du comburant riche en 42, 43.

Une partie 25 de l'air auxiliaire chaud est également utilisée pour le préchauffage du combustible 3, par exemple du gaz naturel, dans un échangeur de chaleur 30 dit échangeur de combustible.

On obtient ainsi du combustible préchauffé 32 qui est ensuite fourni au(x) brûleur(s) 200 de la chambre de combustion 100, et un troisième flux d'air auxiliaire tempéré 33.

## Revendications

1. Procédé pour la combustion, dans une chambre de combustion (100), d'un combustible (32) avec un comburant préchauffé (43) riche en oxygène avec génération de chaleur et de fumées chaudes (11) à l'intérieur de ladite chambre de combustion (100), procédé dans lequel :
- les fumées chaudes (11) sont évacuées de la chambre de combustion (100), lesdites fumées évacuées (11) contenant de la chaleur résiduelle ;
- de la chaleur résiduelle est récupérée en chauffant un gaz auxiliaire (21) par échange thermique avec au moins une partie des fumées chaudes évacuées (11) dans un échangeur de chaleur auxiliaire (10), avec obtention d'un gaz auxiliaire chaud (22) et des fumées tempérées (12),
- au moins une première partie du gaz auxiliaire chaud est introduite dans un échangeur principal (40b) dans lequel du comburant riche en oxygène est préchauffé par échange thermique avec un premier gaz (23) caloporteur comportant ladite au moins une première partie du gaz auxiliaire chaud, avec obtention d'un comburant préchauffé (43) et un gaz caloporteur tempéré (45) ; et
- le comburant préchauffé riche en oxygène est fourni à la chambre de combustion pour la combustion du combustible,
**caractérisé en ce que** :
- une portion (13) des fumées chaudes (11) évacuées n'est pas introduite dans l'échangeur auxiliaire (10) et est mélangée avec ladite au moins une première partie du gaz auxiliaire chaud (22) avant son introduction dans l'échangeur principal (40b) afin d'augmenter la teneur en énergie thermique du gaz caloporteur (23).

2. Procédé suivant la revendication 1, dans lequel le premier gaz caloporteur (23) consiste en un mélange de gaz auxiliaire chaud (22) et la portion (13) des fumées chaudes évacuées (11).

3. Procédé suivant l'une quelconque des revendications précédentes, dans lequel le gaz auxiliaire (21) est un gaz majoritairement inerte, de préférence choisi parmi de la vapeur, du CO₂ et les mélanges de ces deux gaz.

4. Procédé suivant la revendication 1 ou 2, dans lequel le gaz auxiliaire (21) est choisi parmi de l'air, ou un mélange d'air avec un gaz majoritairement inerte.

5. Procédé suivant l'une quelconque des revendications précédentes dans lequel la teneur en fumées chaudes (11) évacuées du premier gaz caloporteur (23) est inférieure ou égale à 30%vol, et de préférence inférieure ou égale à 20%vol.

6. Procédé suivant l'une quelconque des revendications précédentes, dans lequel le rapport volumétrique entre, d'une part, fumées chaudes évacuées et, d'autre part, le premier gaz auxiliaire chaud dans le gaz caloporteur est inférieure ou égal à 45%vol et, de préférence, inférieur ou égal à 25%vol.

7. Procédé suivant l'une quelconque des revendications précédentes, dans lequel la chambre de combustion (100) est une chambre de fusion, une chambre d'affinage, une chambre de fusion/affinage ou une chambre de combustion d'une chaudière.

8. Procédé suivant la revendication 7, dans lequel la chambre de combustion (100) est une chambre de fusion de verre, une chambre d'affinage de verre ou une chambre de fusion/affinage de verre.

9. Procédé pour la combustion, dans une chambre de combustion, d'un combustible avec un comburant préchauffé (43) riche en oxygène avec génération de chaleur et de fumées chaudes (11) à l'intérieur de ladite chambre de combustion, lequel procédé incluant :
* un premier mode d'opération dans lequel :
- les fumées chaudes sont évacuées de la chambre de combustion (100), lesdites fumées évacuées (11) contenant de la chaleur résiduelle ;
- de la chaleur résiduelle est récupérée en chauffant un gaz auxiliaire (21) par échange thermique avec au moins une partie des fumées chaudes évacuées (11) dans un échangeur de chaleur auxiliaire (10), avec obtention d'un gaz auxiliaire chaud (22) et des fumées tempérées (12),
- au moins une première partie du gaz auxiliaire chaud (22) est introduite dans un échangeur principal (40b) dans lequel du comburant riche en oxygène (42) est préchauffé par échange thermique avec un premier gaz caloporteur (23) comportant ladite au moins une première partie du gaz auxiliaire chaud (22); et
- le comburant préchauffé riche en oxygène (43) est fourni à la chambre de combustion (100) pour la combustion du combustible (32),
- le gaz caloporteur (23) ne comporte pas de fumées chaudes évacuées (13), et
∗ un deuxième mode d'opération correspondant au procédé suivant l'une quelconque des revendications précédentes.

10. Procédé suivant la revendication 9, dans lequel dans le premier mode d'opération, le gaz caloporteur (23) consiste en du gaz auxiliaire chaud (22).

11. Installation comportant une chambre de combustion (100), un premier échangeur de chaleur, dit échangeur auxiliaire (10), et un deuxième échangeur de chaleur, dit échangeur principal (40b),
- la chambre de combustion (100) étant munie d'injecteurs pour l'injection d'un combustible (32) et pour l'injection d'un comburant (43) dans la chambre de combustion (100) et d'une sortie de fumées (300),
- l'échangeur auxiliaire (10) comportant, d'une part, une entrée de fumées chaudes (11) et une sortie de fumées tempérées (12) et, d'autre part, une entrée de gaz auxiliaire à chauffer (21) et une sortie de gaz auxiliaire chaud (22), la sortie de fumées chaudes (300) de la chambre de combustion (100) étant fluidiquement reliée à l'entrée de fumées chaudes (11) de l'échangeur auxiliaire (10),
- l'échangeur principal (40b) comportant, d'une part, une entrée de gaz caloporteur chaud (23) et une sortie de gaz caloporteur tempéré (45) et, d'autre part, une entrée de comburant à préchauffer (42) et une sortie de comburant préchauffé (43), la sortie de gaz auxiliaire chaud (22) de l'échangeur auxiliaire (10) étant fluidiquement reliée à l'entrée de gaz caloporteur chaud (23) de l'échangeur principal(40b), la sortie de comburant préchauffé étant fluidiquement reliée à au moins un des injecteurs de la chambre de combustion (100), **caractérisée en ce que** l'installation comprend également une canalisation capable de fluidiquement relier la sortie de fumées chaudes avec l'entrée de gaz caloporteur de l'échangeur principal (40b) en parallèle de l'échangeur auxiliaire (10), de manière à permettre l'écoulement d'une partie contrôlée des fumées chaudes (11) issues de la sortie de fumées (300) vers l'entrée de gaz caloporteur chaud (23) de l'échangeur principal (40b).

12. Installation suivant la revendication 11, dans laquelle les injecteurs pour l'injection de combustible (32) et de comburant (43) sont intégrés dans des brûleurs (200) et/ou des lances d'injection.

13. Installation suivant l'une des revendications 11 et 12, dans laquelle la chambre de combustion (100) est une chambre de fusion, une chambre d'affinage, une chambre de fusion/affinage ou la chambre de combustion d'une chaudière, de préférence une chambre de fusion de verre, une chambre d'affinage de verre, une chambre de fusion/affinage de verre.

14. Procédé de modification d'une installation comportant une chambre de combustion (100), un premier échangeur de chaleur (10), dit échangeur auxiliaire, et un deuxième échangeur de chaleur (40b), dit échangeur principal,
- la chambre de combustion (100) étant munie d'injecteurs pour l'injection d'un combustible (32) et pour l'injection d'un comburant (43) dans la chambre de combustion (100) et d'une sortie de fumées (300),
- l'échangeur auxiliaire (10) comportant, d'une part, une entrée de fumées chaudes (11) et une sortie de fumées tempérées (12) et, d'autre part, une entrée de gaz auxiliaire à chauffer (21) et une sortie de gaz auxiliaire chaud (22), la sortie de fumées chaudes (300) de la chambre de combustion (100) étant fluidiquement reliée à l'entrée de fumées chaudes (11) de l'échangeur auxiliaire (10),
- l'échangeur principal (40b) comportant, d'une part, une entrée de gaz caloporteur chaud (23) et une sortie de gaz caloporteur tempéré (45) et, d'autre part, une entrée de comburant à préchauffer (42) et une sortie de comburant préchauffé (43), la sortie de gaz auxiliaire chaud (22) de l'échangeur auxiliaire (10) étant fluidiquement reliée à l'entrée de gaz caloporteur chaud (23) de l'échangeur principal, la sortie de comburant préchauffé étant fluidiquement reliée à au moins un des injecteurs de la chambre de combustion (100),
le procédé étant **caractérisé en ce qu'**on ajoute à ladite installation une canalisation capable de fluidiquement relier la sortie de fumées chaudes (300) avec l'entrée de gaz caloporteur (23) de l'échangeur principal (40b) en parallèle de l'échangeur auxiliaire, de manière à permettre l'écoulement d'une partie contrôlée des fumées chaudes (11) issues de la sortie de fumées (300) vers l'entrée de gaz caloporteur chaud (23) de l'échangeur principal (40b).

15. Procédé suivant la revendication 14, dans laquelle la chambre de combustion (100) est une chambre de fusion, une chambre d'affinage, une chambre de fusion/affinage ou une chambre de combustion d'une chaudière, de préférence une chambre de fusion de verre, une chambre d'affinage de verre, une chambre de fusion/affinage de verre.

## Patentansprüche

1. Verfahren zum Verbrennen, in einer Brennkammer (100), eines Brennstoffs (32) mit einem vorerhitzten sauerstoffreichen Oxidationsmittel (43) unter Erzeugung von Hitze und heißen Rauchgasen (11) im Inneren der Brennkammer (100), wobei bei dem Verfahren:
- die heißen Rauchgase (11) aus der Brennkammer (100) abgeführt werden, wobei die abgeführten Rauchgase (11) Resthitze enthalten;
- Resthitze rückgewonnen wird, indem ein Hilfsgas (21) durch thermischen Austausch mit mindestens einem Teil der abgeführten heißen Rauchgase (11) in einem Hilfswärmetauscher (10) unter Erhalt eines heißen Hilfsgases (22) und von temperierten Rauchgasen (12) erhitzt wird,
- mindestens ein erster Teil des heißen Hilfsgases in einen Haupttauscher (40b) eingeleitet wird, in dem sauerstoffreiches Oxidationsmittel durch thermischen Austausch mit einem ersten Wärmeträgergas (23), das den mindestens einen ersten Teil des heißen Hilfsgases umfasst, unter Erhalt eines vorerhitzten Oxidationsmittels (43) und eines temperierten Wärmeträgergases (45) vorerhitzt wird; und
- das vorerhitzte sauerstoffreiche Oxidationsmittel zur Verbrennung des Brennstoffs der Brennkammer zugeführt wird,
**dadurch gekennzeichnet, dass**:
- ein Anteil (13) der abgeführten heißen Rauchgase (11) nicht in den Hilfstauscher (10) eingeleitet wird und mit dem mindestens einen ersten Teil des heißen Hilfsgases (22) vor dessen Einleitung in den Haupttauscher (40b) gemischt wird, um den Gehalt an thermischer Energie des Wärmeträgergases (23) zu erhöhen.

2. Verfahren nach Anspruch 1, wobei das erste Wärmeträgergas (23) in einer Mischung aus heißem Hilfsgas (22) und dem Anteil (13) der abgeführten heißen Rauchgase (11) besteht.

3. Verfahren nach einem der vorstehenden Ansprüche, wobei das Hilfsgas (21) ein überwiegend inertes Gas ist, vorzugsweise ausgewählt aus Dampf, aus CO₂ und den Mischungen dieser zwei Gase.

4. Verfahren nach Anspruch 1 oder 2, wobei das Hilfsgas (21) aus Luft, oder einer Mischung von Luft mit einem überwiegend inerten Gas ausgewählt ist.

5. Verfahren nach einem der vorstehenden Ansprüche, wobei der Gehalt an abgeführten heißen Rauchgasen (11) des ersten Wärmeträgergases (23) kleiner oder gleich 30 Vol.-%, und vorzugsweise kleiner oder gleich 20 Vol.-% ist.

6. Verfahren nach einem der vorstehenden Ansprüche, wobei das Volumenverhältnis im Wärmeträgergas zwischen abgeführten heißen Rauchgasen einerseits und dem heißen ersten Hilfsgas andererseits kleiner oder gleich 45 Vol.-%, und vorzugsweise kleiner oder gleich 25 Vol.-% ist.

7. Verfahren nach einem der vorstehenden Ansprüche, wobei die Brennkammer (100) eine Schmelzkammer, eine Läuterkammer, eine Schmelz-/Läuterkammer oder eine Brennkammer eines Heizkessels ist.

8. Verfahren nach Anspruch 7, wobei die Brennkammer (100) eine Glasschmelzkammer, eine Glasläuterkammer oder eine Glasschmelz-/-läuterkammer ist.

9. Verfahren zum Verbrennen, in einer Brennkammer, eines Brennstoffs mit einem vorerhitzten sauerstoffreichen Oxidationsmittel (43) unter Erzeugung von Hitze und heißen Rauchgasen (11) im Inneren der Brennkammer, wobei das Verfahren einschließt:
* eine erste Betriebsart, bei der:
- die heißen Rauchgase aus der Brennkammer (100) abgeführt werden, wobei die abgeführten Rauchgase (11) Resthitze enthalten;
- Resthitze rückgewonnen wird, indem ein Hilfsgas (21) durch thermischen Austausch mit mindestens einem Teil der abgeführten heißen Rauchgase (11) in einem Hilfswärmetauscher (10) unter Erhalt eines heißen Hilfsgases (22) und von temperierten Rauchgasen (12) erhitzt wird,
- mindestens ein erster Teil des heißen Hilfsgases (22) in einen Haupttauscher (40b) eingeleitet wird, in dem sauerstoffreiches Oxidationsmittel (42) durch thermischen Austausch mit einem ersten Wärmeträgergas (23), das den mindestens einen ersten Teil des heißen Hilfsgases (22) umfasst, vorerhitzt wird; und
- das vorerhitzte sauerstoffreiche Oxidationsmittel (43) zur Verbrennung des Brennstoffs (32) der Brennkammer (100) zugeführt wird,
- das Wärmeträgergas (23) keine abgeführten heißen Rauchgase (13) umfasst, und
* eine zweite Betriebsart, die dem Verfahren nach einem der vorstehenden Ansprüche entspricht.

10. Verfahren nach Anspruch 9, wobei in der ersten Betriebsart das Wärmeträgergas (23) in heißem Hilfsgas (22) besteht.

11. Anlage, die eine Brennkammer (100), einen als Hilfstauscher (10) bezeichneten ersten Wärmetauscher, und einen als Haupttauscher (40b) bezeichneten zweiten Wärmetauscher umfasst,
- wobei die Brennkammer (100) mit Einspritzdüsen zum Einspritzen eines Brennstoffs (32) und zum Einspritzen eines Oxidationsmittels (43) in die Brennkammer (100), und mit einem Rauchgasauslass (300) ausgestattet ist,
- wobei der Hilfstauscher (10) einerseits einen Einlass für heiße Rauchgase (11) und einen Auslass für temperierte Rauchgase (12), und andererseits einen Einlass für zu erhitzendes Hilfsgas (21) und einen Auslass für heißes Hilfsgas (22) umfasst, wobei der Auslass für heiße Rauchgase (300) der Brennkammer (100) fluidisch mit dem Einlass für heiße Rauchgase (11) des Hilfstauschers (10) verbunden ist,
- wobei der Haupttauscher (40b) einerseits einen Einlass für heißes Wärmeträgergas (23) und einen Auslass für temperiertes Wärmeträgergas (45), und andererseits einen Einlass für vorzuerhitzendes Oxidationsmittel (42) und einen Auslass für vorerhitztes Oxidationsmittel (43) umfasst, wobei der Auslass für heißes Hilfsgas (22) des Hilfstauschers (10) fluidisch mit den Einlass für heißes Wärmeträgergas (23) des Haupttauschers (40b) verbunden ist, wobei der Auslass für vorerhitztes Oxidationsmittel fluidisch mit mindestens einer der Einspritzdüsen der Brennkammer (100) verbunden ist,
**dadurch gekennzeichnet, dass** die Anlage ebenfalls eine Rohrleitung umfasst, die in der Lage ist, den Auslass für heiße Rauchgase parallel zum Hilfstauscher (10) fluidisch mit dem Wärmeträgergas-Einlass des Haupttauschers (40b) zu verbinden, um das Abfließen eines kontrollierten Teils der aus dem Rauchgasauslass (300) stammenden heißen Rauchgase (11) zum Einlass für heißes Wärmeträgergas (23) des Hauttauschers (40b) zu ermöglichen.

12. Anlage nach Anspruch 11, wobei die Einspritzdüsen zum Einspritzen von Brennstoff (32) und von Oxidationsmittel (43) in Brenner (200) und/oder Einspritzlanzen integriert sind.

13. Anlage nach einem der Ansprüche 11 und 12, wobei die Brennkammer (100) eine Schmelzkammer, eine Läuterkammer, eine Schmelz-/Läuterkammer oder die Brennkammer eines Heizkessels, vorzugsweise eine Glasschmelzkammer, eine Glasläuterkammer, eine Glasschmelz-/-läuterkammer ist.

14. Verfahren zum Modifizieren einer Anlage, die eine Brennkammer (100), einen als Hilfstauscher bezeichneten ersten Wärmetauscher (10), und einen als Haupttauscher bezeichneten zweiten Wärmetauscher (40b) umfasst,
- wobei die Brennkammer (100) mit Einspritzdüsen zum Einspritzen eines Brennstoffs (32) und zum Einspritzen eines Oxidationsmittels (43) in die Brennkammer (100), und mit einem Rauchgasauslass (300) ausgestattet ist,
- wobei der Hilfstauscher (10) einerseits einen Einlass für heiße Rauchgase (11) und einen Auslass für temperierte Rauchgase (12), und andererseits einen Einlass für zu erhitzendes Hilfsgas (21) und einen Auslass für heißes Hilfsgas (22) umfasst, wobei der Auslass für heiße Rauchgase (300) der Brennkammer (100) fluidisch mit dem Einlass für heiße Rauchgase (11) des Hilfstauschers (10) verbunden ist,
- wobei der Haupttauscher (40b) einerseits einen Einlass für heißes Wärmeträgergas (23) und einen Auslass für temperiertes Wärmeträgergas (45), und andererseits einen Einlass für vorzuerhitzendes Oxidationsmittel (42) und einen Auslass für vorerhitztes Oxidationsmittel (43) umfasst, wobei der Auslass für heißes Hilfsgas (22) des Hilfstauschers (10) fluidisch mit den Einlass für heißes Wärmeträgergas (23) des Haupttauschers verbunden ist, wobei der Auslass für vorerhitztes Oxidationsmittel fluidisch mit mindestens einer der Einspritzdüsen der Brennkammer (100) verbunden ist,
wobei das Verfahren **dadurch gekennzeichnet ist, dass** der Anlage eine Rohrleitung hinzugefügt wird, die in der Lage ist, den Auslass für heiße Rauchgase (300) parallel zum Hilfstauscher fluidisch mit dem Wärmeträgergas-Einlass (23) des Haupttauschers (40b) zu verbinden, um das Abfließen eines kontrollierten Teils der aus dem Rauchgasauslass (300) stammenden heißen Rauchgase (11) zum Einlass für heißes Wärmeträgergas (23) des Hauttauschers (40b) zu ermöglichen.

15. Verfahren nach Anspruch 14, wobei die Brennkammer (100) eine Schmelzkammer, eine Läuterkammer, eine Schmelz-/Läuterkammer oder eine Brennkammer eines Heizkessels, vorzugsweise eine Glasschmelzkammer, eine Glasläuterkammer, eine Glasschmelz-/-läuterkammer ist.

## Claims

1. Method for the combustion, in a combustion chamber (100), of a fuel (32) with a preheated oxygen-rich oxidant (43) with generation of heat and hot flue gases (11) inside said combustion chamber (100), in which method:
- the hot flue gases (11) are discharged from the combustion chamber (100), said discharged flue gases (11) containing waste heat;
- waste heat is recovered by heating an auxiliary gas (21) by heat exchange with at least one part of the discharged hot flue gases (11) in an auxiliary heat exchanger (10), producing a hot auxiliary gas (22) and temperate flue gases (12);
- at least one first part of the hot auxiliary gas is fed into a main heat exchanger (40b) in which the oxygen-rich oxidant is preheated by heat exchange with a first heat transfer gas (23) comprising said at least one first part of the hot auxiliary gas, producing a preheated oxidant (43) and a temperate heat transfer gas (45); and
- the preheated oxygen-rich oxidant is fed into the combustion chamber for combustion of the fuel,
**characterised in that**:
- a portion (13) of the discharged hot flue gases (11) is not fed into the auxiliary heat exchanger (10) and is mixed with said at least one first part of the hot auxiliary gas (22) before being fed into the main heat exchanger (40b) in order to increase the heat energy content of the heat transfer gas (23).

2. Method according to claim 1, wherein the first heat transfer gas (23) consists of a mixture of hot auxiliary gas (22) and the portion (13) of the discharged hot flue gases (11).

3. Method according to any of the previous claims, wherein the auxiliary gas (21) is a mostly inert gas, preferably chosen from the group comprising steam, CO₂ and mixtures thereof.

4. Method according to claim 1 or claim 2, wherein the auxiliary gas (21) is chosen from the group comprising air, or a mixture of air and a mostly inert gas.

5. Method according to any of the previous claims, wherein the first heat transfer gas (23) contains less than or equal to 30 vol% of the discharged hot flue gases (11), and preferably less than or equal to 20 vol% thereof.

6. Method according to any of the previous claims, wherein the volume ratio between, on the one hand, the discharged hot flue gases and, on the other hand, the first hot auxiliary gas in the heat transfer gas is less than or equal to 45 vol%, and is preferably less than or equal to 25 vol%.

7. Method according to any of the previous claims, wherein the combustion chamber (100) is a melting chamber, a refining chamber, a melting/refining chamber or a combustion chamber of a boiler.

8. Method according to claim 7, wherein the combustion chamber (100) is a glass-melting chamber, a glass-refining chamber or a glass-melting/refining chamber.

9. Method for the combustion, in a combustion chamber, of a fuel with a preheated oxygen-rich oxidant (43) with generation of heat and hot flue gases (11) inside said combustion chamber, which method comprising:
- a first mode of operation wherein:
-- the hot flue gases are discharged from the combustion chamber (100), said discharged flue gases (11) containing waste heat;
-- waste heat is recovered by heating an auxiliary gas (21) by heat exchange with at least one part of the discharged hot flue gases (11) in an auxiliary heat exchanger (10), producing a hot auxiliary gas (22) and temperate flue gases (12);
-- at least one first part of the hot auxiliary gas (22) is fed into a main heat exchanger (40b) in which the oxygen-rich oxidant (42) is preheated by heat exchange with a first heat transfer gas (23) comprising said at least one first part of the hot auxiliary gas (22); and
-- the preheated oxygen-rich oxidant (43) is fed into the combustion chamber (100) for combustion of the fuel (32);
-- the heat transfer gas (23) does not contain discharged hot flue gases (13), and
- a second mode of operation corresponding to the method according to any of the previous claims.

10. Method according to claim 9, wherein in the first mode of operation, the heat transfer gas (23) consists of the hot auxiliary gas (22).

11. Installation comprising a combustion chamber (100), a first heat exchanger, called auxiliary heat exchanger (10), and a second heat exchanger, called main heat exchanger (40b),
- the combustion chamber (100) being provided with injectors for injecting a fuel (32) and for injecting an oxidant (43) into the combustion chamber (100) and a flue gas outlet (300),
- the auxiliary heat exchanger (10) comprising, on the one hand, an inlet for hot flue gases (11) and an outlet for temperate flue gases (12) and, on the other hand, an inlet for auxiliary gas to be heated (21) and an outlet for hot auxiliary gas (22), the hot flue gas outlet (300) of the combustion chamber (100) being in fluid communication with the inlet for hot flue gases (11) of the auxiliary heat exchanger (10),
- the main heat exchanger (40b) comprising, on the one hand, an inlet for hot heat transfer gas (23) and an outlet for temperate heat transfer gas (45) and, on the other hand, an inlet for oxidant to be preheated (42) and an outlet for preheated oxidant (43), the outlet for hot auxiliary gas (22) of the auxiliary heat exchanger (10) being in fluid communication with the inlet for hot heat transfer gas (23) of the main heat exchanger (40b), the outlet for preheated oxidant being in fluid communication with at least one of the injectors of the combustion chamber (100),
**characterised in that** the installation further comprises piping capable of fluidly connecting the outlet for hot flue gases with the inlet for heat transfer gas of the main heat exchanger (40b) in parallel with the auxiliary heat exchanger (10), so as to allow the flow of a controlled part of the hot flue gases (11) originating from the flue gas outlet (300) towards the inlet for hot heat transfer gas (23) of the main heat exchanger (40b).

12. Installation according to claim 11, wherein the injectors for injecting fuel (32) and oxidant (43) are incorporated into burners (200) and/or injection lances.

13. Installation according to either claim 11 or claim 12, wherein the combustion chamber (100) is a melting chamber, a refining chamber, a melting/refining chamber or the combustion chamber of a boiler, preferably a glass-melting chamber, a glass-refining chamber or a glass-melting/refining chamber.

14. Method for modifying an installation comprising a combustion chamber (100), a first heat exchanger, called auxiliary heat exchanger (10), and a second heat exchanger, called main heat exchanger (40b),
- the combustion chamber (100) being provided with injectors for injecting a fuel (32) and for injecting an oxidant (43) into the combustion chamber (100) and a flue gas outlet (300),
- the auxiliary heat exchanger (10) comprising, on the one hand, an inlet for hot flue gases (11) and an outlet for temperate flue gases (12) and, on the other hand, an inlet for auxiliary gas to be heated (21) and an outlet for hot auxiliary gas (22), the hot flue gas outlet (300) of the combustion chamber (100) being in fluid communication with the inlet for hot flue gases (11) of the auxiliary heat exchanger (10),
- the main heat exchanger (40b) comprising, on the one hand, an inlet for hot heat transfer gas (23) and an outlet for temperate heat transfer gas (45) and, on the other hand, an inlet for oxidant to be preheated (42) and an outlet for preheated oxidant (43), the outlet for hot auxiliary gas (22) of the auxiliary heat exchanger (10) being in fluid communication with the inlet for hot heat transfer gas (23) of the main heat exchanger, the outlet for preheated oxidant being in fluid communication with at least one of the injectors of the combustion chamber (100),
the method being **characterised in that** piping is added to said installation, which piping is capable of fluidly connecting the outlet for hot flue gases (300) with the inlet for heat transfer gas (23) of the main heat exchanger (40b) in parallel with the auxiliary heat exchanger, so as to allow the flow of a controlled part of the hot flue gases (11) originating from the flue gas outlet (300) towards the inlet for hot heat transfer gas (23) of the main heat exchanger (40b).

15. Method according to claim 14, wherein the combustion chamber (100) is a melting chamber, a refining chamber, a melting/refining chamber or a combustion chamber of a boiler, preferably a glass-melting chamber, a glass-refining chamber or a glass-melting/refining chamber.
